# EUROPEAN PATENT APPLICATION

(11) **EP 4 596 242 A1**
(43) Date of publication of application: **06.08.2025**
(21) Application number: 25154352.6
(22) Date of filing: 28.01.2025
(51) Int. Cl.: B32B 37/22, B32B 38/18, B32B 41/00, B65H 29/66, G03G 15/00

(54) **LAMINATING SYSTEM AND PROGRAM**

(30) Priority: 02.02.2024 JP 2024014664
(71) Applicant: KONICA MINOLTA, INC., Tokyo 100-7015 (JP)
(72) Inventor: YAMADA, Kenichi, Chiyoda-ku, Tokyo, 100-7015 (JP)
(74) Representative: Hoffmann Eitle

(57) **Abstract**

A laminating system (1, 1a, 1b, 1c) includes a laminator (26) that performs a lamination process of overlaying a laminate film (F) on a sheet, a conveyor (23) that conveys the sheet to the laminator (26), an obtaining section (21) that obtains remaining amount related information that is information corresponding to a laminate film (F) remaining amount, and a controller (21) that changes the laminate film (F) remaining amount in accordance with the remaining amount related information obtained by the obtaining section (21).

## Description

### BACKGROUND OF THE INVENTION

### TECHNICAL FIELD

The present invention relates to a laminating system and a program.

### DESCRIPTION OF RELATED ART

In a laminating apparatus that performs a lamination process by bonding a laminate film (film) onto a sheet, the following problem arises when the film that is in the form of a roll reaches the end of the roll in the middle of the lamination process. Specifically, since the conveyance of the film is suddenly stopped, the stopped film and the conveyance of the sheet do not match, thus causing great damage to drive mechanisms for the film and the sheet. Failure of the lamination process occurs due to sudden stop of conveyance of a film.

In order to solve the above-described problem, the inventions described in Japanese Unexamined Patent Publication No. H05-229000 and Japanese Unexamined Patent Publication No. H06-126832 disclose that conveyance of the film and the sheet is stopped by detecting that the remaining amount of the film becomes small (a near empty state).

However, in the inventions described in Japanese Unexamined Patent Publication No. H05-229000 and Japanese Unexamined Patent Publication No. H06-126832, the remaining amount of the film for detecting the near empty state is set to a uniform length, such as a length corresponding to the maximum sheet size. Therefore, in a case where the sheet size of the lamination process target is smaller than the maximum sheet size, the near empty state is detected although the remaining amount of the film is equal to or more than the amount for one sheet and the lamination process is interrupted, so that the film may be wastefully discarded. Since the film is expensive as a consumable material, the film being wastefully discarded leads to an increase in cost.

An object of the present invention is to provide a laminating system and a program that are capable of suppressing cost by reducing waste of a laminate film without causing damage to an apparatus and a product.

### SUMMARY OF THE INVENTION

To achieve at least one of the abovementioned objects, according to an aspect of the present invention, a laminating system reflecting one aspect of the present invention includes:
a laminator that performs a lamination process of overlaying a laminate film on a sheet;
a conveyor that conveys the sheet to the laminator;
an obtaining section that obtains remaining amount related information that is information corresponding to a laminate film remaining amount; and
a controller that changes the laminate film remaining amount in accordance with the remaining amount related information obtained by the obtaining section.

### BRIEF DESCRIPTION OF THE DRAWINGS

The advantages and features provided by one or more embodiments of the invention will become more fully understood from the detailed description given hereinafter and the appended drawings which are given by way of illustration only, and thus are not intended as a definition of the limits of the present invention, and wherein:
FIG. 1 is a front view illustrating a schematic configuration of a laminating system according to a first embodiment;
FIG. 2 is a functional block diagram illustrating a control structure of the laminating system according to the first embodiment;
FIG. 3 is a diagram illustrating an example in which sheets are conveyed to be a continuous belt shape according to the first embodiment;
FIG. 4 is a flowchart illustrating the flow of a lamination control process according to the first embodiment;
FIG. 5A is a diagram illustrating an example of a consumption length of a film for one sheet according to the first embodiment;
FIG. 5B is a diagram illustrating an example of the consumption length of a film for one sheet according to the first embodiment;
FIG. 5C is a diagram illustrating an example of the consumption length of film for one sheet according to the first embodiment;
FIG. 6A is a diagram which illustrates an example of calculation of a sheet feeding stop remaining amount according to the first embodiment;
FIG. 6B is a diagram which illustrates an example of calculation of the sheet feeding stop remaining amount according to the first embodiment;
FIG. 6C is a diagram which illustrates an example of calculation of the sheet feeding stop remaining amount according to the first embodiment;
FIG. 7 is a flowchart illustrating the flow of the lamination control process according to a second embodiment;
FIG. 8A is a diagram illustrating a timing at which sheet feeding is stopped according to the second embodiment;
FIG. 8B is a diagram illustrating a timing at which sheet feeding is stopped according to the second embodiment;
FIG. 9 is a flowchart illustrating the flow of a sheet feeding stop remaining amount calculation process according to a third embodiment;
FIG. 10 is a front view illustrating another example of the schematic configuration of the laminating system;
FIG. 11 is a front view illustrating another example of the schematic configuration of the laminating system; and
FIG. 12 is a front view illustrating another example of the schematic configuration of the laminating system.

### DETAILED DESCRIPTION

Hereinafter, one or more embodiments of the present invention will be described with reference to the drawings. However, the scope of the invention is not limited to the disclosed embodiments.

Hereinafter, one or more embodiments of the present invention will be described in detail with reference to the drawings.

### <First Embodiment>

### (Configuration of Laminating System)

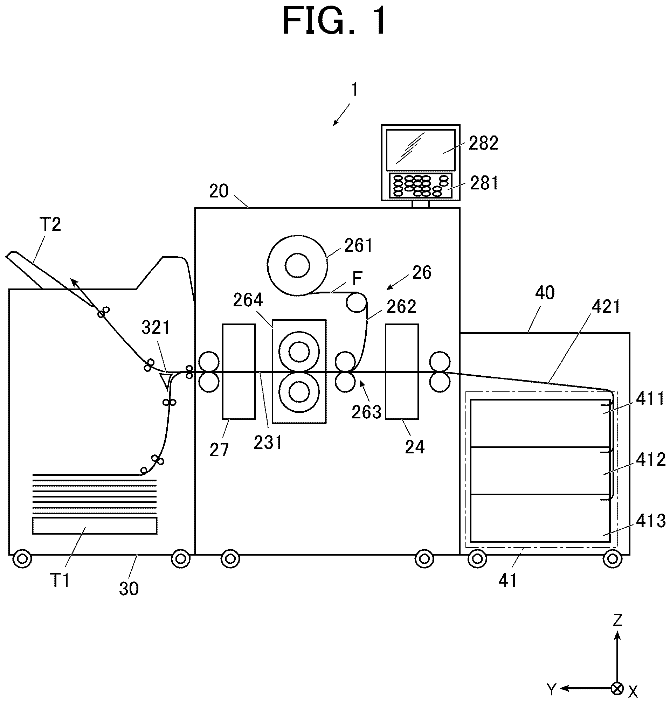

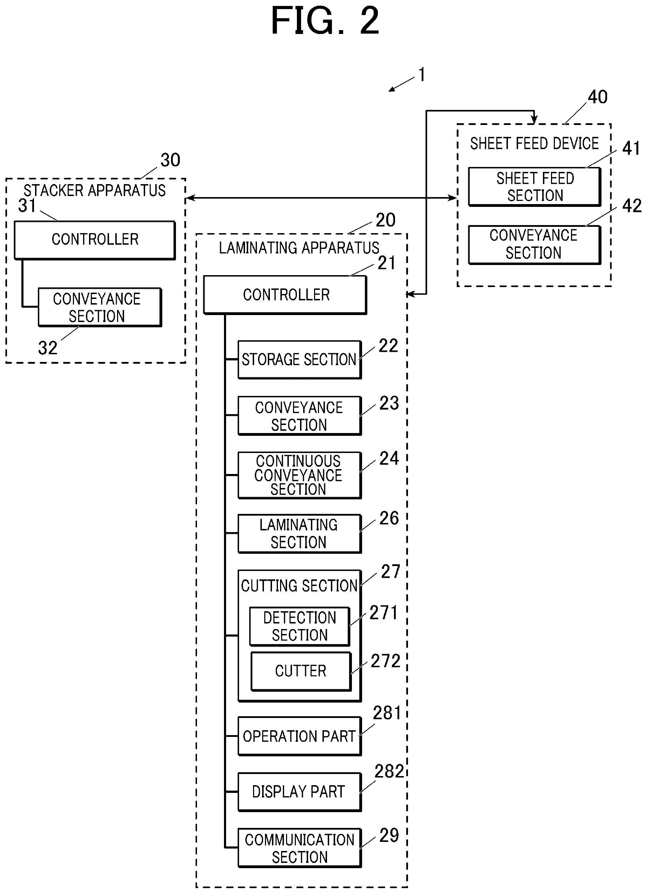

As illustrated in FIG. 1 and FIG. 2, a laminating system (hereinafter, system 1) according to the present embodiment includes a sheet feed device 40, a laminating apparatus 20, and a stacker apparatus 30.

### (Configuration of Sheet Feed Device)

The sheet feed device 40 includes a sheet feed section 41 (sheet feeder) and a conveyance section 42, and conveys a sheet (cut sheet) from any one of sheet feed trays 411 to 413 of the sheet feed section 41 to the laminating apparatus 20.

The conveyance section 42 includes a conveyance path 421 leading from the sheet feed section 41 to the laminating apparatus 20, and conveys the sheet.

The sheet feed section 41 includes the sheet feed trays 411 to 413 that store sheets by predetermined sheet type and/or size.

### (Configuration of Laminating Apparatus)

The laminating apparatus 20 is installed between the sheet feed device 40 and the stacker apparatus 30.

The laminating apparatus 20 includes a controller 21 (hardware processor), a storage section 22, a conveyance section 23 (conveyor), a continuous conveyance section 24, a laminating section 26 as a laminator, a cutting section 27, an operation part 281, a display part 282, and a communication section 29.

The controller 21 includes a central processing unit (CPU), a random access memory (RAM), a read only memory (ROM), and the like.

The CPU reads various process programs stored in the ROM, loads the programs to the RAM, and integrally controls the operation of the laminating apparatus 20 in cooperation with the various programs loaded to the RAM.

The controller 21 instructs the sheet feed device 40 to execute a predetermined sheet feed process.

The controller 21 instructs the stacker apparatus 30 to execute a predetermined sheet ejection process.

The storage section 22 is a nonvolatile storage device, such as a hard disk drive (HDD) or a semiconductor memory, that stores various data such as programs.

The storage section 22 stores data, such as program data and various types of setting data, such that the controller 21 can read and write the data.

The conveyance section 23 includes a conveyance path 231 and a plurality of rollers, and conveys the sheet conveyed from the sheet feed device 40 to the continuous conveyance section 24, the laminating section 26 and the cutting section 27 in this order. Next, the conveyance section 23 conveys the sheet subjected to the lamination process to the stacker apparatus 30.

As illustrated in FIG. 1, the continuous conveyance section 24 is provided on the sheet conveyance path on the upstream side of the laminating section 26.

The continuous conveyance section 24 superposes the rear end of a preceding sheet on the upper portion of the front end of a following sheet by a predetermined superposition amount, and conveys the sheets to be a continuous belt shape without intervals. As a method of superposing the sheets, a known method can be used (e.g., see Japanese Unexamined Patent Publication No. 2009-073668).

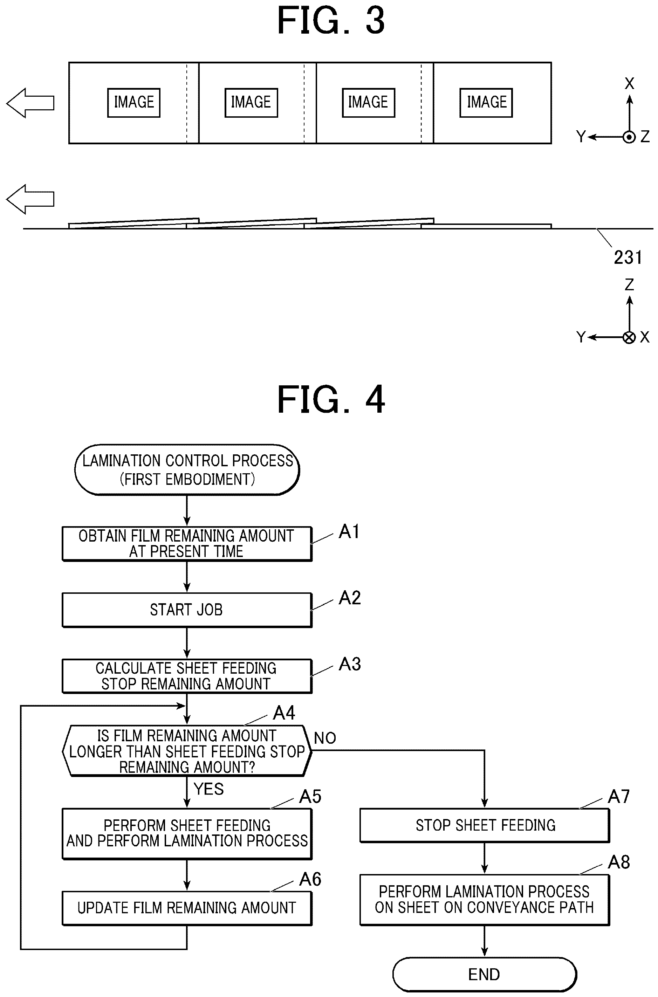

FIG. 3 illustrates an example in which sheets are conveyed to be a continuous belt shape. Arrows illustrated in FIG. 3 indicate a sheet conveyance direction. The upper side in FIG. 3 is a diagram as the sheets are viewed from above. The lower side in FIG. 3 is a diagram as the sheets are viewed from a direction orthogonal to the conveyance direction on the sheets. On the sheets in the example illustrated in FIG. 3, images are formed by an external image forming apparatus.

The laminating section 26 continuously attaches a film F (laminate film) to the surfaces on the Z-axis positive side (front surfaces) of sheets to perform the lamination process.

The laminating section 26 includes a film roll 261, a conveyance path 262, a bonding section 263, and a fixing section 264.

The film roll 261 is a roll of the film F formed of a transparent resin film layer as a base material layer and an adhesive layer.

The conveyance path 262 conveys the film F from the film roll 261 to the nip portion of the bonding section 263.

As illustrated in FIG. 1, the bonding section 263 includes two rollers and sandwiches a sheet and the film F at the nip portion formed by the two rollers, thereby bonding the adhesive layer of the film F to the surface of the sheet. Thus, the sheet and the film F are bonded together.

The fixing section 264 includes a heating roller that heats the sheet to which the film F is attached, and a pressure roller that presses the sheet. The fixing section 264 fuses the adhesive layer of the film F by heating and fixes the film F to the sheet by pressing.

The cutting section 27 includes a detection section 271, a cutter 272, and the like.

The detection section 271 detects an edge of a sheet. The detection section 271 outputs the detection result to the controller 21.

The cutter 272 includes a blade (not illustrated) and a moving mechanism (not illustrated) that moves the blade in the width direction of a sheet.

The cutter 272 inserts its blade between the superposed ends of the preceding sheet and the following sheet at the edge of the rear end of the preceding sheet under the control of the controller 21. Next, the cutter 272 pushes down and releases the superposed end of the following sheet by the blade and moves the blade in the width direction of the sheet, thereby cutting the continuously laminate film F along the edge of the rear end of the preceding sheet. Thus, the sheets can be separated from each other.

The operation part 281 includes a touch screen formed in such a manner as to cover the display screen of the display part 282, and various operation buttons, such as numeric buttons and a start button. The operation part 281 outputs, to the controller 21, operation signals based on user operations.

The display part 282 includes a liquid crystal display (LCD) and displays various screens in accordance with instructions of display signals input from the controller 21.

The communication section 29 includes a communication control card, such as a local area network (LAN) card. The communication section 29 exchanges various kinds of data with an external apparatus (e.g., a personal computer) connected to a communication network, such as a LAN or a wide area network (WAN).

### (Configuration of Stacker Apparatus)

The stacker apparatus 30 is installed on the downstream side of the laminating apparatus 20.

The stacker apparatus 30 includes a controller 31, a conveyance section 32, a large-capacity sheet ejection tray T1, and a sub-tray T2.

The large-capacity sheet ejection tray T1 includes a stage that moves up and down, and accommodates a large amount of sheets in a state in which the sheets are stacked on the stage.

Sheets are ejected to the sub tray T2 in a state in which the sheets are exposed to the outside and visible.

The controller 31 includes a CPU, a RAM, a ROM, and the like. The CPU reads various process programs stored in the ROM, loads the programs to the RAM, and integrally controls the operation of the stacker apparatus 30 in cooperation with the various programs loaded to the RAM.

The controller 31 executes a sheet ejection process of ejecting a laminated sheet conveyed from the laminating apparatus 20 to the large-capacity sheet ejection tray T1 or the sub-tray T2 in response to an instruction signal received from the laminating apparatus 20.

The conveyance section 32 includes a conveyance path 321 and a plurality of rollers, and ejects, under the control of the controller 31, the laminated sheet conveyed from the laminating apparatus 20 to the large-capacity sheet ejection tray T1 or the sub-tray T2.

Depending on the amount of printing, the type of sheet to be used, or the like, the stacker apparatus 30 may not be provided, and a sheet ejection tray may be provided in the laminating apparatus 20. In this case, the conveyance section 23 of the laminating apparatus 20 conveys the sheet subjected to lamination process to the sheet ejection tray.

### (Operation of Laminating System)

Next, the operation of the system 1 according to the first embodiment will be described with reference to the flowchart of FIG. 4.

The system 1 executes a lamination control process illustrated in FIG. 4 when the laminating apparatus 20 receives a job for executing the lamination process from an external apparatus via the communication section 29. Alternatively, the system 1 executes the lamination control process illustrated in FIG. 4 when a job for executing the lamination process is input by the user via the operation part 281.

A job includes setting information of the job.

The setting information of the job includes the size of a sheet on which the lamination process is performed (target sheet), a lamination condition(s) that is a processing condition(s) in the lamination process, and the like.

The controller 21 of the laminating apparatus 20 obtains the setting information of the job including remaining amount related information by receiving the job from the external apparatus or being input by the user (obtaining step). The controller 21 functions as an obtaining section.

The remaining amount related information is information corresponding to the remaining amount of the film F (laminate film remaining amount), and is information corresponding to the size of the target sheet on which the lamination process is performed.

Instead of including the size of the target sheet, the setting information of the job may include selection information on one of the sheet feed trays 411 to 413 of the sheet feed device 40, the one in which the target sheet is stored. In this case, the controller 21 obtains the size of the target sheet on the basis of the selection information on the sheet feed tray storing the target sheet and sheet information including the sheet size and the like associated with the sheet feed tray.

The controller 21 may obtain the size of the target sheet or the selection information on one of the sheet feed trays 411 to 413, the one in which the target sheet is stored, in accordance with a user's input operation via the operation part 281.

### (Lamination Control Process of First Embodiment)

The controller 21 of the laminating apparatus 20 obtains the remaining amount of the film F mounted in the laminating section 26 at the present time (Step A1). Specifically, the controller 21 calculates the feed amount of the film F at the present time based on the driving time or the driving amount of the conveyance mechanism that conveys the film F after the film roll 261 is mounted in the laminating section 26. Next, the controller 21 calculates the remaining amount of the film F at the present time by subtracting the feed amount of the film F at the present time from the length of the film F at the time when the film roll 261 was mounted in the laminating section 26.

Next, the controller 21 starts the job received from the external apparatus, namely, starts the lamination process by the laminating section 26 (Step A2).

Next, the controller 21 calculates a sheet feeding stop remaining amount (first length) that is the remaining amount of the film F at the timing at which the sheet feeding of the target sheet is stopped (Step A4). Specifically, the controller 21 calculates the sheet feeding stop remaining amount on the basis of the unusable length of the film F, the conveyance distance of the target sheet, the lamination condition, and the size of the target sheet.

The unusable length of the film F is a conveyance distance of the film F from the roll core of the film roll 261 to the bonding section 263. In other words, the unusable length of the film F is a length from the roll core of the film roll 261 formed by the film F to a position at which the film F contacts the target sheet.

The conveyance distance of the target sheet is a distance from one of the sheet feed trays 411 to 413 of the sheet feed device 40, the one in which the target sheet is stored, to the laminating section 26. In other words, the conveyance distance of the target sheet is set in accordance with the sheet feed tray selected in the job.

The lamination condition includes information on whether the film F is consumed by a predetermined amount longer than, the same length as or a predetermined amount shorter than the length of the sheet in the conveyance direction. In the case where the film F is consumed by a predetermined amount longer than the length of the sheet in the conveyance direction or in the case where the film F is consumed by a predetermined amount shorter than the length of the sheet in the conveyance direction, the lamination condition includes information on the predetermined amount.

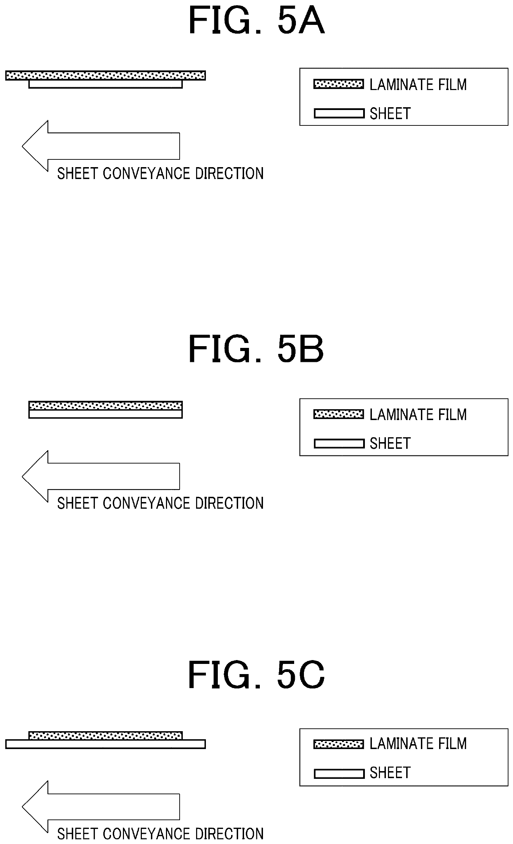

FIG. 5A to FIG. 5C illustrate an example of the consumption lengths of the film F for one sheet.

FIG. 5A illustrates a case where the film F is consumed by a predetermined amount longer than the length of the sheet in the conveyance direction. In this case, for example, the film F is consumed by 5 [mm] longer from the ends in the conveyance direction of the sheet at the front and rear in the conveyance direction of the sheet.

FIG. 5B is a case where the film F is consumed by the same length as the length of the sheet in the conveyance direction.

FIG. 5C is a case where the film F is consumed by a predetermined amount shorter than the length of the sheet in the conveyance direction.

In this case, for example, the film F is consumed by 5 [mm] from the ends in the conveyance direction of the sheet at the front and rear in the conveyance direction of the sheet.

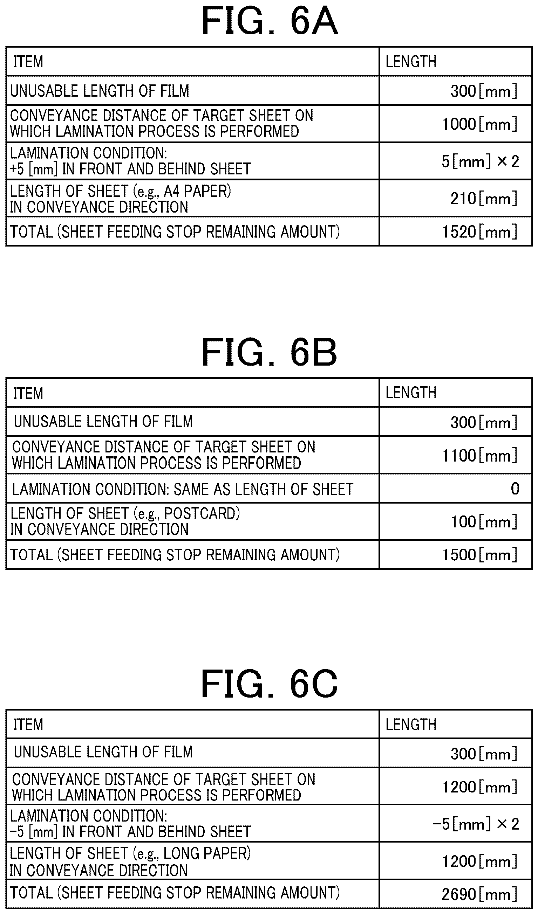

FIG. 6A to FIG. 6C illustrate examples of calculation of the sheet feeding stop remaining amount.

In the examples illustrated in FIG. 6A to FIG. 6C, the unusable length of the film F is 300 [mm].

In FIG. 6A, the conveyance length of the target sheet (sheet of A4 size in the case of FIG. 6A) is 1,000 [mm]. The lamination condition includes a condition that the film F is consumed by 5 [mm] longer from the ends of the sheet in the conveyance direction at the front and back in the conveyance direction of the sheet. The length of the target sheet in the conveyance direction is 210 [mm]. In this case, the controller 21 obtains 1,520 [mm], which is the sum of the distances of the above items, as the sheet feeding stop remaining amount.

In FIG. 6B, the conveyance length of the target sheet (postcard in the case of FIG. 6B) is 1,100 [mm]. The lamination condition includes a condition that the film F is consumed by the same length as the length of the sheet in the conveyance direction. The length of the target sheet in the conveyance direction is 100 [mm]. In this case, the controller 21 obtains 1,500 [mm], which is the sum of the distances of the above items, as the sheet feeding stop remaining amount.

In FIG. 6C, the conveyance length of the target sheet (long sheet in the case of FIG. 6C) is 1,200 [mm]. The lamination condition includes a condition that the film F is consumed by 5 [mm] shorter from the ends of the sheet in the conveyance direction at the front and back in the conveyance direction of the sheet. The length of the target sheet in the conveyance direction is 1,200 [mm]. In this case, the controller 21 obtains 2,690 [mm], which is the sum of the distances of the above items, as the sheet feeding stop remaining amount.

Referring back to FIG. 4, the controller 21 determines whether the remaining amount of the film F at the present time is longer than the sheet feeding stop remaining amount calculated (obtained) in Step A3 (Step A4).

If the remaining amount of the film F at the present time is longer than the sheet feeding stop remaining amount (Step A4; YES), the controller 21 feeds the target sheet with the sheet feed device 40. Next, based on the lamination condition, the controller 21 attaches (bonds) the film F to the target sheet to perform the lamination process with the laminating section 26 (Step A5).

Next, the controller 21 subtracts the amount of the film F consumed in the lamination process in Step A5 from the remaining amount of the film F to update the remaining amount of the film F at the present time (Step A6). Next, the controller 21 moves the lamination control process to Step A4.

On the other hand, if the remaining amount of the film F at the present time is equal to or less than the sheet feeding stop remaining amount (Step A4; NO), the controller 21 stops sheet feeding of the target sheet by the sheet feed section 41 of the sheet feed device 40 (Step A7).

Next, on the basis of the lamination condition, with the laminating section 26, the controller 21 attaches the film F to the fed target sheet placed on the conveyance path from the sheet feed tray storing the target sheet to the laminating section 26 to perform the lamination process (Step A8). Next, the controller 21 ends the lamination control process. That is, the controller 21 stops conveyance of the target sheet by the conveyance section 23 before the remaining amount of the film F becomes shorter than the unusable length.

Through the lamination control process described above, the lamination process can be carried out until the remaining amount of the film F becomes shorter than the predetermined length that is the sum of the unusable length and the consumption length of the film F to be consumed by one target sheet.

In the lamination control process, the controller 21 changes the remaining amount of the laminate film to be discarded in accordance with the remaining amount related information (changing step).

### <Second Embodiment>

Next, a second embodiment will be described.

Hereinafter, differences from the first embodiment will be described mainly.

A near empty length (second length) in the second embodiment is a length corresponding to the maximum size of the target sheet. The near empty length is the remaining amount of the film F at the timing at which the controller 21 detects the near empty state. For example, in a case where the maximum size of the target sheet is 1,200 [mm] that is the length of the long sheet in the conveyance direction, the unusable length of the film F is 300 [mm], and the conveyance distance of the sheet of the maximum size is 1,000 [mm], the near empty length is 2,500 [mm] that is the sum of these.

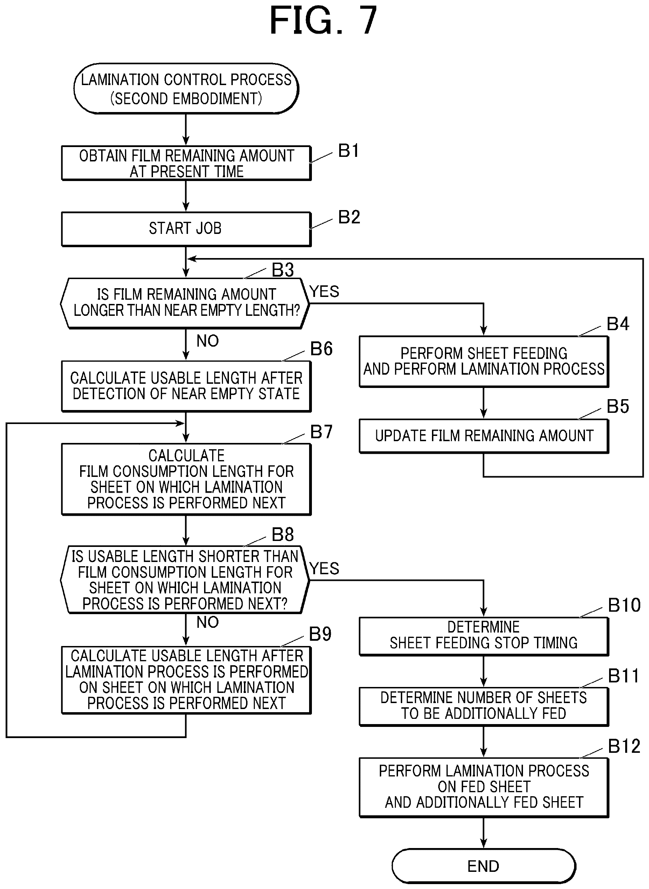

FIG. 7 illustrates a flowchart of the lamination control process in the second embodiment.

### (Lamination Control Process of Second Embodiment)

The controller 21 executes Steps A1 and A2 similar to Steps B 1 and B2 of the lamination control process in the first embodiment.

Next, the controller 21 determines whether the remaining amount of the film F at the present time is longer than the near empty length (Step B3).

If the remaining amount of the film F at the present time is longer than the near empty length (Step B3; YES), the controller 21 executes Steps A5 and A6 similar to Steps B4 and B5 of the lamination control process in the first embodiment, and moves the lamination control process to Step B3.

On the other hand, if the remaining amount of the film F at the present time is equal to or less than the near empty length (Step B3; NO), namely, if the controller 21 detects a near-empty state, the controller 21 calculates the length (usable length) of the film F, the usable length being able to be used after the detection of the near empty state (Step B6). Specifically, the controller 21 sets a length obtained by subtracting the unusable length of the film F from the remaining amount of the film F at the present time as the usable length after the detection of the near empty state.

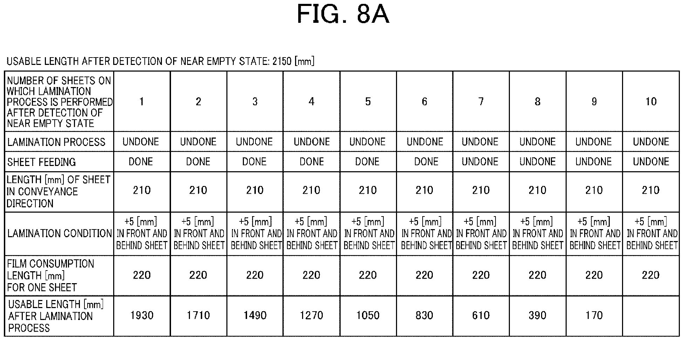

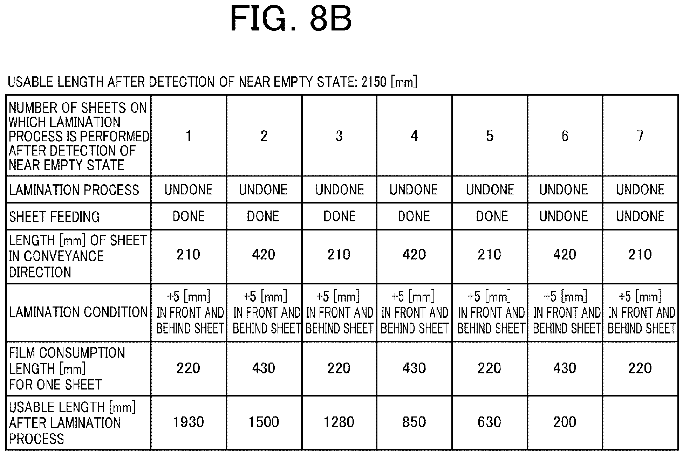

FIG. 8A and FIG. 8B illustrate examples of the timing at which the sheet feeding of the target sheet is stopped. FIG. 8A illustrates a case where the target sheet is of A4 size. FIG. 8B illustrates a case where a sheet of A4 size and a sheet of A3 size both as the target sheet are alternately fed.

In the examples illustrated in FIG. 8A and FIG. 8B, the usable length after detection of the near empty state is 2,150 [mm].

Next, the controller 21 calculates the consumption length of the film F to be consumed by one target sheet on which the lamination process is performed next (Step B7).

In the examples illustrated in FIG. 8A and FIG. 8B, the target sheet on which the lamination process is performed next, namely, the first sheet on which the lamination process is performed after detection of the near empty state, is 210 [mm] long in the conveyance direction. The lamination condition includes a condition that the film F is consumed by 5 [mm] longer from the ends of the sheet in the conveyance direction at the front and back in the conveyance direction of the sheet. In this case, the controller 21 calculates the consumption length of the film F for one target sheet on which the lamination process is performed next as 5 + 210 + 5 = 220 [mm].

Next, the controller 21 determines whether the usable length of the film F at the present time is shorter than the consumption length of the film F calculated in Step B7 (Step B8).

In the examples illustrated in FIG. 8A and FIG. 8B, the usable length of the film F at the present time is 2,150 [mm], and the consumption length of the film F for one target sheet on which the lamination process is performed next is 220 [mm]. The case where the usable length of the film F at the present time is equal to or longer than the consumption length of the film F calculated in Step B7 (Step B8; NO) will be described. In this case, the controller 21 calculates the usable length of the film F after the lamination process is performed on one target sheet on which the lamination process is performed next (Step B9). Specifically, the controller 21 sets a length obtained by subtracting, from the usable length of the film F at the present time, the consumption length of the film F for one target sheet on which the lamination process is performed next, as the usable length of the film F after the lamination process is performed on the one target sheet on which the lamination process is performed next.

In the examples illustrated in FIG. 8A and FIG. 8B, the controller 21 calculates the usable length of the film F after the lamination process is performed on the one target sheet on which the lamination process is performed next as 2,150 - 220 = 1,930 [mm].

Next, the controller 21 moves the lamination control process to Step B7, and calculates the consumption length of the film F for the second target sheet on which the lamination process is performed after detection of the near empty state. In the example illustrated in FIG. 8A, the consumption length of the film F for the second target sheet on which the lamination process is performed after detection of the near empty state is 220 [mm]. In the example illustrated in FIG. 8B, the consumption length of the film F for the second target sheet on which the lamination process is performed after detection of the near empty state is 430 [mm].

In Step B8, the controller 21 determines whether the usable length of the film F after the lamination process is performed on the first target sheet on which the lamination process is performed after detection of the near empty state is shorter than the consumption length of the film F for the second target sheet.

In Step B9, the controller 21 calculates the usable length of the film F after the lamination process is performed on the second target sheet by subtracting the consumption length of the film F for the second target sheet from the usable length of the film F after the lamination process is performed on the first target sheet on which the lamination process is performed after detection of the near empty state. In the example illustrated in FIG. 8A, the usable length of the film F after the lamination process is performed on the second target sheet is 1,930 - 220 = 1,710 [mm]. In the example illustrated in FIG. 8B, the usable length of the film F after the lamination process is performed on the second target sheet is 1,930 - 430 = 1,500 [mm].

Thereafter, the controller 21 executes processes similar to the above-described processes.

The case where the usable length of the film F is shorter than the consumption length of the film F calculated in Step B7 (Step B8; YES) will be described. This is, for example, a case where, as illustrated in FIG. 8A, the usable length of the film F after the lamination process is performed on the ninth target sheet on which the lamination process is performed after detection of the near empty state is 170 [mm], and the consumption length of the film F for the tenth target sheet is 220 [mm]. Alternatively, this is a case where, as illustrated in FIG. 8B, the usable length of the film F after the lamination process is performed on the sixth target sheet on which the lamination process is performed after detection of the near empty state is 200 [mm], and the consumption length of the film F for the seventh target sheet is 220 [mm].

In this case, the controller 21 determines, as the sheet feeding stop timing, the timing at which the usable length of the film F becomes shorter than the consumption length of the film F calculated in Step B7 (Step B10). The sheet feeding stop timing is the timing at which the sheet feeding of the target sheet from/by the sheet feed device 40 is stopped.

To be specific, in the example illustrated in FIG. 8A, the controller 21 determines, as the sheet feeding stop timing, the timing after the ninth target sheet on which the lamination process is performed after detection of the near empty state is fed but before the tenth target sheet is fed. In the example illustrated in FIG. 8B, the controller 21 determines, as the sheet feeding stop timing, the timing after the sixth target sheet on which the lamination process is performed after detection of the near empty state is fed but before the seventh target sheet is fed.

Next, the controller 21 determines, in accordance with the number of fed target sheets, the number of target sheets to be additionally fed after detection of the near empty state (Step B11).

In the example illustrated in FIG. 8A, sheets up to the sixth target sheet on which the lamination process is performed after detection of the near empty state have been fed. In addition, the sheet feeding stop timing is after the ninth target sheet on which the lamination process is performed after detection of the near empty state is fed but before the tenth target sheet is fed. In this case, the controller 21 determines the number of target sheets to be additionally fed after detection of the near empty state to be three.

In the example illustrated in FIG. 8B, sheets up to the fifth target sheet on which the lamination process is performed after detection of the near empty state have been fed.

In addition, the sheet feeding stop timing is after the sixth target sheet on which the lamination process is performed after detection of the near empty state is fed but before the seventh target sheet is fed. In this case, the controller 21 determines the number of target sheets to be additionally fed after detection of the near empty state to be one.

Next, with the laminating section 26, the controller 21 performs the lamination process on the fed target sheet(s) placed on the conveyance path and also feeds the number of target sheets determined in Step B11 and performs the lamination process on the additionally fed target sheet(s) (Step B12), and then ends the lamination control process.

The near empty length in the second embodiment may correspond to the maximum conveyance distance of the target sheet. The near empty length in this case is a third length, and is the sum of the maximum conveyance distance of the target sheet, the unusable length of the film F, and the size of the target sheet that is conveyed for the maximum conveyance distance.

The system 1 may include other apparatuses, such as an image forming apparatus and a post-processing apparatus, between the sheet feed device 40 and the laminating apparatus 20. The sheet feed device 40 may include a plurality of sheet feed sections 41. In this case, the maximum conveyance distance is set in accordance with the configuration of other apparatus(es) disposed between the laminating section 26 and the sheet feed section(s) 41 and the configuration of the sheet feed section(s) 41.

### <Third Embodiment>

Next, a third embodiment will be described.

Hereinafter, differences from the first embodiment will be described mainly.

In the third embodiment, the controller 21 calculates the sheet feeding stop remaining amount based on the productivity of the system, the conveyance speed of the system, the length of the target sheet in the conveyance direction, the conveyance distance of the target sheet, the lamination condition, and the unusable length of the film F.

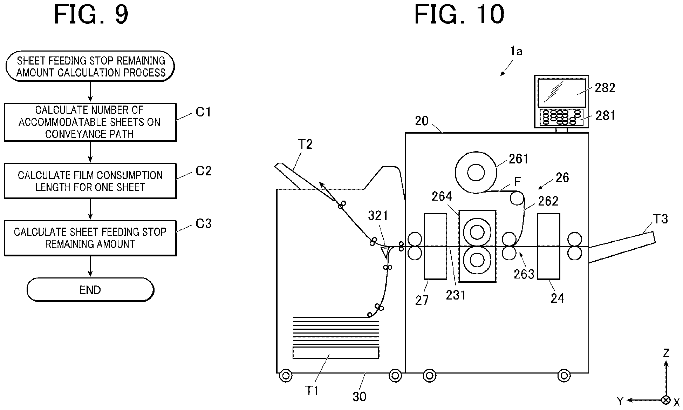

In the lamination control process of the third embodiment, the controller 21 executes, instead of Step A3, a sheet feeding stop remaining amount calculation process illustrated in FIG. 9.

### (sheet feeding stop remaining Amount Calculation Process of Third Embodiment)

The controller 21 calculates the number of target sheets that can be placed on the conveyance path from one of the sheet feed trays 411 to 413 of the sheet feed device 40, the one in which the target sheets are stored, to the laminating section 26 (the number of accommodatable sheets) (Step C1).

Specifically, the controller 21 calculates the number of accommodatable sheets based on the productivity of the system, the conveyance speed of the system, the length of the target sheet in the conveyance direction, and the conveyance distance of the target sheet. For example, if the productivity of the system is 100 [ppm], the processing time per target sheet is 600 [ms]. If the conveyance speed of the system is 500 [mm/s] and the length of the target sheet in the conveyance direction is 210 [mm], the conveyance time per target sheet is 420 [ms]. In this case, since the time obtained by subtracting the conveyance time per target sheet from the processing time per target sheet is 180 [ms], the target sheet-to-target sheet distance is 90 [mm]. The target sheet-to-target sheet distance is the distance from the rear end of the preceding target sheet to the front end of the following target sheet on the conveyance path. Therefore, the length required to accommodate one target sheet on the conveyance path is 300 [mm] that is the sum of the length of the target sheet in the conveyance direction of 210 [mm] and the target sheet-to-target sheet distance of 90 [mm]. If the conveyance distance of the target sheet is 3,000 [mm], the number of accommodatable sheets is 3,000 [mm] ÷ 300 [mm] = 10 sheets.

Next, the controller 21 calculates the consumption length of the film F for one target sheet (Step C2).

For example, the case where the length of the target sheet in the conveyance direction is 210 [mm], and the lamination condition includes a condition that the film F is consumed by 5 [mm] longer from the ends of the sheet in the conveyance direction at the front and rear of the sheet in the conveyance direction will be described.

In this case, the controller 21 calculates the consumption length of the film F for one target sheet as 5 + 210 + 5 = 220 [mm].

Next, the controller 21 calculates the sheet feeding stop remaining amount on the basis of the unusable length of the film F, the number of accommodatable sheets calculated in Step C1, and the consumption length of the film F calculated in Step C2 (Step C3).

To be specific, if the unusable length of the film F is 300 [mm], the number of accommodatable sheets calculated in Step C1 is ten, and the consumption length of the film F for one target sheet calculated in Step C2 is 220 [mm], the controller 21 calculates the sheet feeding stop remaining amount as 300 [mm] + 10 sheets × 220 [mm] = 2,500 [mm].

### <Others>

The configuration of the laminating system is not limited to that illustrated in the above embodiments.

The laminating system (system 1a) illustrated in FIG. 10 does not include a sheet feed device, but includes the laminating apparatus 20 and the stacker apparatus 30.

The laminating apparatus 20 includes a manual sheet feed tray T3 that is a sheet feed section. In this case, the conveyance section 23 conveys the sheet on the manual sheet feed tray T3 to the continuous conveyance section 24, the laminating section 26 and the cutting section 27 in this order. Next, the conveyance section 23 conveys the sheet subjected to the lamination process to the stacker apparatus 30.

Conventionally, in the system 1a, for example, if the lamination process is performed on 1,000 sheets of A4 size, four 60 [m] film rolls are needed as the film roll 261. In this case, the film to be discarded due to detection of the near empty state and interruption of the lamination process is about 4 [m]. The film of 4 [m] is equivalent to 400 yen, and is equivalent to 400 sheets of A4 size. By executing the lamination control process in the present embodiment, it is possible to reduce the film to be discarded.

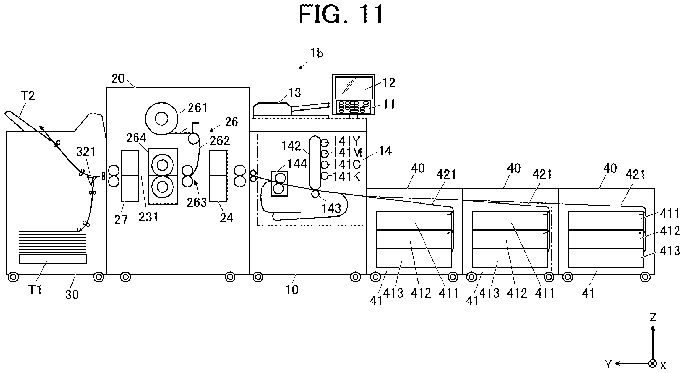

The laminating system (system 1b) illustrated in FIG. 11 includes three sheet feed devices 40, an image forming apparatus 10, the laminating apparatus 20, and the stacker apparatus 30.

The laminating apparatus 20 of the system 1b does not include the operation part 281 and the display part 282.

The image forming apparatus 10 is provided between the sheet feed devices 40 and the laminating apparatus 20.

The image forming apparatus 10 forms a color image by the electrophotographic method on the basis of image data obtained by reading an image from a document or image data of a job received from an external apparatus (not illustrated). The image forming apparatus 10 ejects the sheet on which an image has been formed to the laminating apparatus 20.

As illustrated in FIG. 11, the image forming apparatus 10 includes an operation part 11, a display part 12, a document reading unit 13, an image forming section 14 (image former), and the like.

The operation part 11 has the same configuration as the operation part 281 of the laminating apparatus 20 of the first embodiment.

The display part 12 has the same configuration as the display part 282 of the laminating apparatus 20 of the first embodiment.

The document reading unit 13 includes an automatic document feeder (ADF), a scanner, and the like, and reads an image of a document to generate read image data.

The image forming section 14 forms an image on the basis of the image data on the sheet supplied from any of the sheet feed devices 40.

The image forming section 14 includes photosensitive drums 141Y, 141M, 141C and 141K corresponding to the colors of yellow (Y), magenta (M), cyan (C) and black (K), an intermediate transfer belt 142, a secondary transfer roller 143, a fixing section 144, and the like.

The image forming section 14 uniformly charges the photosensitive drum 141Y, and then performs scanning and exposure with a laser beam on the basis of image data of yellow color to form an electrostatic latent image. Next, the image forming section 14 makes a yellow toner adhere to the electrostatic latent image on the photosensitive drum 141Y to develop the image.

The photosensitive drums 141M, 141C and 141K work in the same manner as the photosensitive drum 141Y except that the colors to be treated are different, and thus descriptions thereof will be omitted.

The image forming section 14 sequentially transfers the toner images of the respective colors formed on the photosensitive drums 141Y, 141M, 141C and 141K onto the rotating intermediate transfer belt 142 (primary transfer). That is, the image forming section 14 forms, on the intermediate transfer belt 142, a color toner image in which the toner images of the four colors are superimposed on top of one another.

The image forming section 14 transfers the color toner image on the intermediate transfer belt 142 onto a sheet with the secondary transfer roller 143 (secondary transfer).

The fixing section 144 includes a heating roller that heats the sheet onto which the color toner image has been transferred and a pressure roller that presses the sheet, thereby fixing the color toner image to the sheet by heating and pressing.

The laminating section 26 of the system 1b performs the lamination process on the sheet on which the image has been formed by the image forming section 14. The remaining amount related information in this case is information corresponding to the size of the sheet set as the sheet on which an image is formed by the image forming section 14.

Conventionally, in the system 1b, for example, if the lamination process is performed on 1,000 sheets of A4 size, four 60 [m] film rolls are needed as the film roll 261. Since the conveyance length of the sheet from the sheet feed device 40 to the laminating section 26 is longer in the system 1b than in the system 1a, the film to be discarded due to detection of the near empty state and interruption of the lamination process is about 12 [m]. The film of 12 [m] is equivalent to 1,200 yen, and is equivalent to 1,200 sheets of A4 size. By executing the lamination control process in the present embodiment, it is possible to reduce the film to be discarded.

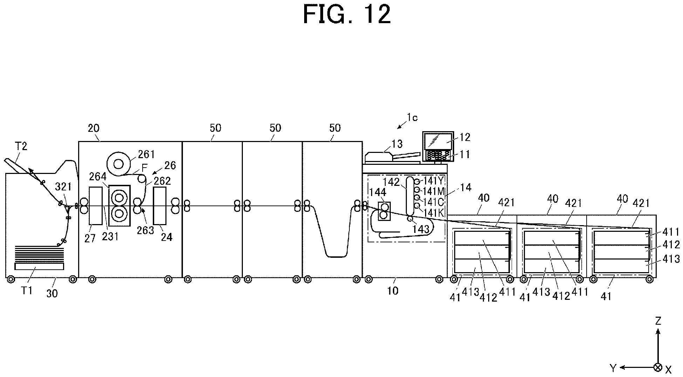

The laminating system (system 1c) illustrated in FIG. 12 includes three sheet feed devices 40, the image forming apparatus 10, three post-processing apparatuses 50, the laminating apparatus 20, and the stacker apparatus 30.

The laminating apparatus 20 of the system 1c does not include the operation part 281 and the display part 282.

The post-processing apparatuses 50 are provided between the image forming apparatus 10 and the laminating apparatus 20.

The post-processing apparatuses 50 perform post-processing on the sheet on which the image has been formed by the image forming apparatus 10, and ejects the post-processed sheet to the laminating apparatus 20. Examples of the post-processing include de-curling and an inspection process.

Conventionally, in the system 1c, for example, if the lamination process is performed on 1,000 sheets of A4 size, four 60 [m] film rolls are needed as the film roll 261. Since the conveyance length of the sheet from the sheet feed device 40 to the laminating section 26 is longer in the system 1c than in the system 1b, the film to be discarded due to detection of the near empty state and interruption of the lamination process is about 20 [m]. The film of 20 [m] is equivalent to 2,000 yen, and is equivalent to 2,000 sheets of A4 size. By executing the lamination control process in the present embodiment, it is possible to reduce the film to be discarded.

### <Advantageous Effects>

As described above, the laminating system (system 1) according to the present embodiment(s) includes the laminator (laminating section) that performs the lamination process of overlaying a laminate film (film F) on a sheet.

The laminating system according to the present embodiment includes the conveyance section 23 (conveyor) that conveys the sheet to the laminator.

The laminating system according to the present embodiment includes the obtaining section (controller 21) that obtains the remaining amount related information that is information corresponding to the laminate film remaining amount.

The laminating system according to the present embodiment includes the controller 21 that changes the laminate film remaining amount in accordance with the remaining amount related information obtained by the obtaining section.

Thus, the final remaining amount of the film F corresponding to the remaining amount related information can be the amount to be discarded. This can reduce waste of the film F and suppress cost without damaging the apparatus and the product, as compared with a case where a uniform length, such as a length corresponding to the maximum sheet size, is the amount to be discarded.

In the laminating system according to the present embodiment, the remaining amount related information is information corresponding to the size of the target sheet on which the lamination process is performed.

Thus, the final remaining amount of the film F corresponding to the size of the target sheet can be the amount to be discarded. This can reduce waste of the film F and suppress cost without damaging the apparatus and the product, as compared with a case where a uniform length, such as a length corresponding to the maximum sheet size, is the amount to be discarded.

In the laminating system according to the present embodiment, the controller 21 controls the conveyance of the sheet at the conveyance section such that the lamination process is performed until the laminate film remaining amount becomes less than a predetermined length corresponding to the size of the target sheet.

Thus, the final remaining amount of the film F corresponding to the size of the target sheet can be the amount to be discarded.

In the laminating system according to the present embodiment, the obtaining section (controller 21) obtains the remaining amount related information from setting information of a job.

Therefore, it is possible to easily obtain the remaining amount related information.

In the laminating system according to the present embodiment, the obtaining section (controller 21) obtains the remaining amount related information input by the user.

Therefore, the final remaining amount of the film F corresponding to the size of the target sheet desired by the user can be the amount to be discarded.

In the laminating system according to the present embodiment, the controller 21 calculates the laminate film remaining amount at the present time based on the feed amount of the laminate film.

Therefore, the remaining amount of the film F at the present time can be easily calculated.

In the laminating system according to the present embodiment, the controller 21 calculates the feed amount of the laminate film based on the driving time or the driving amount of the roll of the laminate film.

Therefore, the remaining amount of the film F at the present time can be easily calculated.

In the laminating system according to the present embodiment, the predetermined length is longer than the unusable length that is the length from the roll core of the laminate film to the position at which the laminate film contacts the sheet.

As a result, it is possible to prevent a situation in which due to sudden stop of conveyance of the film F, the stopped film F and the conveyance of the sheet do not match and accordingly great damage occurs in the drive mechanisms of the film F and the sheet. Also, it is possible to prevent a situation in which due to sudden stop of conveyance of the film F, failure occurs in the lamination process.

In the laminating system according to the present embodiment, the predetermined length is the sum of the unusable length and a length based on the size of the target sheet.

Thus, the lamination process can be performed until the remaining amount of the film F becomes shorter than the sum of the unusable length and the length based on the size of the target sheet. This can reduce waste of the film F as compared with a case where a uniform length of the film F, such as a length corresponding to the maximum sheet size, is the amount to be discarded.

In the laminating system according to the present embodiment, the controller 21 stops conveyance of the sheet at the conveyance section 23 before the laminate film remaining amount becomes shorter than the unusable length.

As a result, it is possible to prevent a situation in which due to sudden stop of conveyance of the film F, the stopped film F and the conveyance of the sheet do not match and accordingly great damage occurs in the driving mechanisms of the film F and the sheet. Also, it is possible to prevent a situation in which due to sudden stop of conveyance of the film F, failure occurs in the lamination process.

The laminating system according to the present embodiment includes the image forming section 14 that forms an image on a sheet.

The laminator (laminating section 26) performs the lamination process on the sheet on which the image has been formed by the image forming section 14.

Thus, even in the configuration in which the image forming apparatus 10 is provided on the upstream side of the laminating apparatus 20, it is possible to reduce waste of the film F and suppress cost without damaging the apparatus and the product, as compared to a case where a uniform length of the film F, such as a length corresponding to the maximum sheet size, is the amount to be discarded.

In the laminating system according to the present embodiment, the remaining amount related information is information corresponding to the size of a sheet set as a sheet on which an image is formed by the image forming section 14.

Thus, in the configuration in which the image forming apparatus 10 is provided on the upstream side of the laminating apparatus 20, the final remaining amount of the film F corresponding to the size of the sheet on which an image is formed can be the amount to be discarded. This can reduce waste of the film F and suppress cost without damaging the apparatus and the product, as compared with a case where a uniform length, such as a length corresponding to the maximum sheet size, is the amount to be discarded.

The laminating system according to the present embodiment includes the sheet feed section 41 that feeds a sheet.

When detecting that the laminate film remaining amount is equal to or less than the first length (sheet feeding stop remaining amount), the controller 21 stops sheet feeding from the sheet feed section 41.

The controller 21 adjusts the first length in accordance with the sheet size set in a job.

The controller 21 adjusts the first length in accordance with the sheet size and the sheet conveyance distance set in the job. The sheet feed section 41 includes the sheet feed trays 411 to 413. The sheet conveyance distance is set in accordance with the sheet feed tray selected in the job.

Thus, the final remaining amount of the film F corresponding to the sheet size and the sheet conveyance distance set in the job can be the amount to be discarded. This can reduce waste of the film F and suppress cost without damaging the apparatus and the product, as compared with a case where a uniform length, such as a length corresponding to the maximum sheet size, is the amount to be discarded.

The laminating system according to the present embodiment includes the sheet feed section 41 that feeds a sheet.

When detecting that the laminate film remaining amount is equal to or less than the second length (near empty length) corresponding to the maximum sheet size, the controller 21 adjusts, in accordance with the sheet size set in the job, the timing at which sheet feeding is stopped.

The controller 21 determines, in accordance with the number of fed sheets and the sheet size, the number of sheets to be additionally fed after detecting that the laminate film remaining amount is equal to or less than the second length.

Thus, the final remaining amount of the film F corresponding to the sheet size set in the job can be the amount to be discarded. This can reduce waste of the film F and suppress cost without damaging the apparatus and the product, as compared with a case where a uniform length, such as a length corresponding to the maximum sheet size, is the amount to be discarded.

The laminating system according to the present embodiment includes the sheet feed section 41 that feeds a sheet.

When detecting that the laminate film remaining amount is equal to or less than the third length (near empty length) corresponding to the maximum sheet conveyance distance, the controller 21 adjusts, in accordance with the sheet conveyance distance set in the job, the timing at which sheet feeding is stopped.

The controller 21 determines, in accordance with the number of fed sheets and the sheet size, the number of sheets to be additionally fed after detecting that the laminate film remaining amount is equal to or less than the third length.

The sheet feed section 41 includes the sheet feed trays 411 to 413. The sheet conveyance distance is set in accordance with the sheet feed tray selected in the job.

Thus, the final remaining amount of the film F corresponding to the sheet conveyance distance set in the job can be the amount to be discarded. This can reduce waste of the film F and suppress cost without damaging the apparatus and the product, as compared with a case where a uniform length, such as a length corresponding to the maximum sheet size, is the amount to be discarded. Since the maximum number of sheets can be placed in the maximum conveyance distance, the processing productivity in the lamination process can be maximized.

In the laminating system according to the present embodiment, the maximum conveyance distance is set in accordance with the configuration of an apparatus(es)/device(s) disposed between the laminator (laminating section 26) and the sheet feed section(s) 41 and the configuration of the sheet feed section(s) 41.

Thus, the final remaining amount of the film F corresponding to the configuration of the laminating system can be the amount to be discarded. This can reduce waste of the film F and suppress cost without damaging the apparatus and the product, as compared with a case where a uniform length, such as a length corresponding to the maximum sheet size, is the amount to be discarded.

In the laminating system according to the present embodiment, the predetermined length is set in accordance with the lamination condition.

Thus, the lamination process can be performed until the remaining amount of the film F becomes shorter than the sum of the unusable length and the length based on the size of the target sheet corresponding to the lamination condition.

Although the present invention has been described in detail based on some embodiments, the present invention is not limited to the above-described embodiments, and can be modified without departing from the scope of the invention.

For example, although in the above embodiments, the continuous conveyance section 24 superposes the rear end of the preceding sheet on the upper portion of the front end of the following sheet by the predetermined superposition amount, this is not a limitation. The superposition amount may be set to 0. That is, continuous conveyance may be performed such that the edge of the rear end of the preceding sheet and the edge of the front end of the following sheet are in contact with each other. Alternatively, the rear end of the preceding sheet may be superposed on the lower portion of the front end of the following sheet by the predetermined superposition amount.

In the case where the rear end of the preceding sheet is superposed on the lower portion of the front end of the following sheet by the predetermined superposition amount, the film F is cut along the edge of the front end of the following sheet by the cutting section 27.

The laminating method of the above embodiments is a hot laminating method in which the adhesive layer of the film F is melted and fixed by the fixing section 264, but not limited thereto.

The laminating method may be a cold laminating method in which fixing is performed with the adhesive layer of the film F that can adhere at room temperature, without heating at the fixing section 264.

The laminating section 26 of the above embodiments bonds the film F to the surface on the Z-axis positive side (front surface) of the sheet, but not limited thereto. The laminating section 26 may bond the film F to both the surface on the Z-axis positive side and the surface on the Z-axis negative side of the sheet.

Besides, the detailed configuration and the detailed operation of each apparatus/device of the laminating system can be appropriately changed without departing from the scope of the present invention.

Although embodiments of the present invention have been described and illustrated in detail, the disclosed embodiments are made for purposes of illustration and example only and not limitation. The scope of the present invention should be interpreted by terms of the appended claims.

## Claims

1. A laminating system (1, 1a, 1b, 1c) comprising:
a laminator (26) that performs a lamination process of overlaying a laminate film (F) on a sheet;
a conveyor (23) that conveys the sheet to the laminator (26);
an obtaining section (21) that obtains remaining amount related information that is information corresponding to a laminate film (F) remaining amount; and
a controller (21) that changes the laminate film (F) remaining amount in accordance with the remaining amount related information obtained by the obtaining section (21).

2. The laminating system (1, 1a, 1b, 1c) according to claim 1, wherein the remaining amount related information is information corresponding to a size of a target sheet that is the sheet on which the lamination process is performed.

3. The laminating system (1, 1a, 1b, 1c) according to claim 2, wherein the controller (21) controls the conveyance of the sheet at the conveyor (23) such that the lamination process is performed until the laminate film (F) remaining amount becomes less than a predetermined length corresponding to the size of the target sheet.

4. The laminating system (1, 1a, 1b, 1c) according to claim 1, wherein the obtaining section (21) obtains the remaining amount related information from setting information of a job.

5. The laminating system (1, 1a, 1b, 1c) according to claim 3, wherein the predetermined length is longer than an unusable length that is a length from a roll core of the laminate film (F) to a position at which the laminate film (F) contacts the sheet.

6. The laminating system (1, 1a, 1b, 1c) according to claim 5, wherein the predetermined length is a sum of the unusable length and a length based on the size of the target sheet, and/or wherein the controller (21) stops the conveyance of the sheet at the conveyor (23) before the laminate film (F) remaining amount becomes shorter than the unusable length.

7. The laminating system (1, 1a, 1b, 1c) according to claim 1, further comprising an image former (14) that forms an image on the sheet,
wherein the laminator (26) performs the lamination process on the sheet on which the image has been formed by the image former (14).

8. The laminating system (1, 1a, 1b, 1c) according to claim 7, wherein the remaining amount related information is information corresponding to a size of a sheet set as the sheet on which the image is formed by the image former (14).

9. The laminating system (1, 1a, 1b, 1c) according to claim 1, further comprising a sheet feeder (41) that feeds the sheet,
wherein in response to detecting that the laminate film (F) remaining amount is equal to or less than a first length, the controller (21) stops the sheet feeding from the sheet feeder (41).

10. The laminating system (1, 1a, 1b, 1c) according to claim 9, wherein the controller (21) adjusts the first length in accordance with a size of the sheet set in a job, or wherein the controller (21) adjusts the first length in accordance with a size of the sheet and a conveyance distance of the sheet set in a job.

11. The laminating system (1, 1a, 1b, 1c) according to claim 9,
wherein the sheet feeder (41) includes a plurality of sheet feed trays (411, 412, 413), and
wherein a conveyance distance of the sheet is set in accordance with a sheet feed tray among the plurality of sheet feed trays (411, 412, 413) selected in a job.

12. The laminating system (1, 1a, 1b, 1c) according to claim 1, further comprising a sheet feeder (41) that feeds the sheet,
wherein in response to detecting that the laminate film (F) remaining amount is equal to or less than a second length corresponding to a maximum sheet size, the controller (21) adjusts, in accordance with a size of the sheet set in a job, a timing at which the sheet feeding is stopped.

13. The laminating system (1, 1a, 1b, 1c) according to claim 12, wherein the controller (21) determines, in accordance with a number of fed sheets and the size of the sheet, a number of sheets to be additionally fed after detecting that the laminate film (F) remaining amount is equal to or less than the second length.

14. The laminating system (1, 1a, 1b, 1c) according to claim 1, further comprising a sheet feeder (41) that feeds the sheet,
wherein in response to detecting that the laminate film (F) remaining amount is equal to or less than a third length corresponding to a maximum sheet conveyance distance, the controller (21) adjusts, in accordance with a conveyance distance of the sheet set in a job, a timing at which the sheet feeding is stopped.

15. The laminating system (1, 1a, 1b, 1c) according to claim 14, wherein the controller (21) determines, in accordance with a number of fed sheets and a size of the sheet, a number of sheets to be additionally fed after detecting that the laminate film (F) remaining amount is equal to or less than the third length.

16. The laminating system (1, 1a, 1b, 1c) according to claim 14,
wherein the sheet feeder (41) includes a plurality of sheet feed trays (411, 412, 413), and wherein the conveyance distance of the sheet is set in accordance with a sheet feed tray among the plurality of sheet feed trays (411, 412, 413) selected in a job, and/or
wherein the maximum sheet conveyance distance is set in accordance with a configuration of an apparatus (10, 50) disposed between the laminator (26) and the sheet feeder (41) and a configuration of the sheet feeder (41).

17. A program causing, of a laminating system (1, 1a, 1b, 1c) including a laminator (26) that performs a lamination process of overlaying a laminate film (F) on a sheet, a computer (21) to perform:
obtaining remaining amount related information that is information corresponding to a laminate film (F) remaining amount; and
changing the laminate film (F) remaining amount in accordance with the obtained remaining amount related information.
